# EUROPÄISCHE PATENTANMELDUNG

(11) **EP 2 557 374 A2**
(43) Veröffentlichungstag der Anmeldung: **13.02.2013**
(21) Anmeldenummer: 12179778.1
(22) Anmeldetag: 09.08.2012
(51) Int. Cl.: F24J 2/40, F24J 2/46, F24D 11/00

(54) **Sonnenkollektor**

(30) Priorität: 12.08.2011 DE 102011052692; 21.03.2012 DE 102012102423
(71) Anmelder: Müller, Günter, 72459 Albstadt (DE)
(72) Erfinder: Müller, Günter, 72459 Albstadt (DE)
(74) Vertreter: Weiss, Peter

(57) **Zusammenfassung**

Ein Sonnenkollektor (1) soll eine Abschattungseinrichtung (2) aufweisen.

## Beschreibung

### TECHNISCHES GEBIET

Die Erfindung betrifft einen Sonnenkollektor nach den Merkmalen des Oberbegriffs des Anspruchs 1, sowie ein Heizungssystem nach dem Oberbegriff des Anspruchs 12.

### STAND DER TECHNIK

Seit Millionen von Jahren ist die Sonne der Energielieferant für alle Lebewesen auf der Erde. Letztlich wäre ohne Sonne nie Leben auf der Erde entstanden. Die Sonne liefert ihre Energie kostenlos und nach heutigem menschlichen Ermessen noch für einen unendlich langen Zeitraum.

Der Mensch benötigt vom ersten Atemzug an Energie für seine Versorgung mit Lebensmitteln und die Zubereitung seiner Nahrung. Ebenso bevorzugt der Mensch eine bestimmte Umgebungstemperatur, bei welcher er sich wohl fühlt. In vielen Gebieten auf der Erde ist es zumindest in weiten Abschnitten des Kalenderjahres entweder zu kalt oder zu warm. Ursprünglich konnte sich die Menschheit lediglich an den Strahlen der Sonne wärmen, eine andere Möglichkeit gab es zunächst nicht.

Mit der Nutzung des Feuers eröffneten sich für die Menschheit neue Perspektiven. Obgleich der Brennstoff im Laufe der Zeit sich änderte, blieb der Vorgang doch immer derselbe. Es wird etwas verbrannt, es entsteht nutzbare Energie in Form von Wärme-, Licht- oder Bewegungsenergie.

Nur zur Vervollständigung sei erwähnt, was alles verbrannt werden kann:
Biomasse wie Holz, Pflanzenöl, tierische Produkte wie Öl oder Tran sowie weitere pflanzliche Produkte
Fossile Brennstoffe wie Kohle, Erdöl und Erdgas

Alle diese Energiegewinnungsvorgänge benötigen Sauerstoff und setzen bei der Verbrennung Abgase, zum Beispiel C0₂ frei. Bekanntlich sind diese Abgase für die Gesundheit von Mensch und Tier nicht unbedingt zuträglich. Das erwähnte C0₂ ist nach heutigem Erkenntnisstand sogar für den Treibhauseffekt und eine sich abzeichnende massive Veränderung des Klimas auf der Erde verantwortlich.

Weiterhin gibt es die Möglichkeit, Energie aus Kernenergieanlagen zu gewinnen.

Um es nochmals zu wiederholen, allen diesen Formen der Energiegewinnung ist die Endlichkeit ihres Brennstoffs, auch des Brennstoffs von Kernenergieanlagen, eigen. Bei der Kernenergie ist bis heute zusätzlich das Thema der Abfallbehandlung nicht geklärt.

Einzig die Sonne steht für alle täglich neu mit riesigen Energiemengen und noch für sehr lange Zeit zur Verfügung. Wasser- und Windkraftanlagen sollen hier nicht betrachtet werden.

Die Nutzung der Sonne zur Energiegewinnung erfolgt heute auf zwei Arten:
Mittels Fotovoltaikanlagen wird Sonnenenergie in elektrische Energie umgewandelt. Eine Art der Energiegewinnung die in Deutschland in den letzten Jahren auch wegen der staatlichen Subventionierung, hier der Einspeisevergütung für die gewonnene elektrische Energie, sehr erfolgreich war. Zu klären ist noch die Speichermöglichkeit, da die Sonne nur zu bestimmten Tageszeiten scheint bzw. an Tagen mit bewölktem Himmel nur mit eingeschränkter Intensität zur Verfügung steht.

Insbesondere interessant für die vorliegende Erfindung ist die zweite Art der Nutzung der Sonnenenergie, die thermische Solarenergie. In "heissen" Ländern, wie beispielsweise Griechenland, werden schon seit vielen Jahren auf den Dächern der Wohnhäuser Wasserspeicher, üblicherweise einfache Metalltanks, installiert, um die Wasserversorgung auch in Zeiten knapper Wasservorräte zu sichern. Nebenbei wird das in diesen Metallbehältern gespeicherte Wasser während des Tages von der Sonne erwärmt. Für "kältere" Länder, wie Deutschland, ist dies jedoch keine Alternative, da die Effizienz der Wärmegewinnung eher gering ist.

Folgerichtig wurden Methoden entwickelt, die eine wesentlich höhere Effizienz erreichen. Es gibt heute zwei Arten von Kollektoren: Flach- und Röhrenkollektoren. Beide werden sinnvoller Weise auf einem, in unseren Breitengraden, nach Süden ausgerichteten Hausdach installiert. Bei Flachdächern kann der ideale Winkel für die Einstrahlung der Sonne noch durch eine Aufständerung der Kollektoren erreicht werden.

Die Kollektoren sind von einer Wärmeträgerflüssigkeit durchflossen. Einer der Anbieter in Deutschland benutzt Wasser als Wärmeträgerflüssigkeit. Durch die Sonneneinstrahlung erhitzt sich die Flüssigkeit und wird durch Pumpen in den Heizraum des Gebäudes geleitet. Dort fliesst die Wärmeträgerflüssigkeit durch den Warmwasserspeicher und erwärmt das Brauchwasser. Ergänzend kann zusätzlich ein Pufferspeicher für Heizungsunterstützung angeschlossen werden.

Der Betrieb erfolgt in der Form, dass bei entsprechender Sonneneinstrahlung zuerst die in den Kollektoren befindliche Wärmeträgerflüssigkeit sich erhitzt. Sobald eine voreingestellte Temperaturdifferenz zwischen Temperatur in den Kollektoren und Temperatur in dem im Heizraum befindlichen Warmwasserspeicher erreicht wird, werden von der Steuerungseinheit die Umlaufpumpen aktiviert. Die in den Kollektoren gewonnene Wärmeenergie wird durch die Wärmeträgerflüssigkeit transportiert und beim Durchfliessen des Warmwasserspeichers an das darin befindliche kältere Wasser abgegeben, um dann beim erneuten Durchfliessen der Kollektoren wieder mit neuer Wärme "geladen" zu werden.

Sobald eine wiederum für den Warmwasserspeicher eingestellte Temperatur erreicht ist, wird die Wärmeträgerflüssigkeit bei Anlagen mit Heizungsunterstützung durch einen Pufferspeicher für die Heizungsunterstützung geleitet. In beiden Fällen wird die jetzt gespeicherte Wärme entweder durch den Verbrauch von Warmwasser oder durch die Einspeisung in den Heizkessel für die Weiterleitung zu der Fussbodenheizung oder den Radiatoren wieder verbraucht. Bei entsprechender Sonnenscheinintensität wird die entnommene Wärmeenergie am selben oder am folgenden Tag wieder aufgefüllt.

Thermische Solaranlagen dieser Art können mit jedem anderen Heizungssystem kombiniert werden, seien es Öl- oder Gasheizungen. Die "Verbrennungsheizung" springt immer dann ein, wenn keine oder nicht genügend Wärme vorhanden ist.

Die Schwierigkeit besteht jetzt darin, je nach Bedarf an Wärmeenergie die Art und die Fläche der Kollektoren und somit die zu gewinnende Energiemenge und die Grösse der Energiespeicher, sowohl Warmwasserspeicher als auch Pufferspeicher zur Heizungsunterstützung aufeinander abzustimmen. Ist die mit den Kollektoren zu gewinnende Energiemenge zu gering, können keine für eine Nutzung als Warmwasser oder für eine Heizungsunterstützung notwendigen Temperaturen erreicht werden. Aber auch die Grösse der Speicher muss mit der Wärmeleistung der Kollektoren korrespondieren. Ist die Leistung der Kollektoren zu gross oder sind die Speicher zu klein, kommt es zu "Notabschaltungen" des Kreislaufs der Wärmeträgerflüssigkeit. Laut den Herstellern der Kollektoren sind Beschädigungen des Systems ausgeschlossen. Bei zu häufigen Notabschaltungen kann es jedoch zu einer "Verkokung" der Wärmeträgerflüssigkeit kommen, was letztlich zur Zerstörung /Verstopfung der Kollektoren führt.

Es muss die in den Wintermonaten oder an schattigen Sommertagen zu niedrige Energiemenge mit der an einem heissen Sommertag sehr reichlichen Energiemenge verglichen und korreliert werden.

Zur Vermeidung von Kollektorschäden neigen die Installationsbetriebe in Deutschland, nach anfänglich immer wieder aufgetretenen Kollektorschäden, dazu, die Leistung der Kollektoren nach der an Sommertagen maximal zu erreichenden Energiemenge zu berechnen.

Eine Vergrösserung des Speichervolumens ist bei Nachrüstungen nicht immer möglich, da nicht genügend Raum zur Verfügung steht bzw. die vorgefertigten Speicherbehälter nicht mehr in den zur Aufstellung vorgesehenen Heiz- oder Kellerraum transportiert werden können, da beispielsweise die Türöffnungen zu schmal sind. Das Hintereinanderschalten von mehreren Speicherbehältern gilt als nicht effizient, da es unter hydraulischen Gesichtspunkten als sehr anspruchsvoll gilt.

Häufig wird von den Installationsbetrieben geraten, bei einer eher grossen Kollektorfläche und somit Kollektorleistung für die im Sommer überschüssigen Energiemengen ein Schwimmbad im Garten zu bauen. Die für das Warmwasser- und Heizungsunterstützungssystem zu grossen Energiemengen könnten dann zur "schadlosen" Entsorgung und Erwärmung des Schwimmbadwassers verwendet werden.

In einem Beispiel für die Ganzjahresversorgung eines Einfamilienhauses wird im Stern Nr. 19 vom 05.05.2011 von einem Neubauhaus berichtet. Mit einer Kollektorfläche von 95 m² wird ein Warmwasser- und Pufferspeicher zur Heizung des Hauses mit insgesamt 9360 Litern Wasser mit der notwendigen Wärmeenergie versorgt. Nur für Notfälle an sehr kalten Wintertagen steht noch ein mit Holz befeuerter Kachelofen zur Verfügung.

Generell treten insbesondere bei einer Nachrüstung oder Ergänzung einer bestehenden Öl- oder Gasheizung zwei Problemstellungen auf:
Entweder ist die Kollektorleistung zu gross und die Speicher können an heissen Tagen die gelieferte Wärmemenge nicht aufnehmen und verkraften oder die Kollektorleistung ist zu klein und die gelieferte Wärmemenge ist an kalten Tagen für eine ausreichende Versorgung zu klein.

Die Sonne als Energiequelle kann aber von der Menschheit nicht nach Bedarf an- bzw. ausgeknipst werden. Das heisst, dass an heissen Tagen die auf den Dächern von Gebäude installierten Kollektoren unweigerlich mit Energie versorgt und die im Gebäude befindlichen Energiespeicher geladen werden.

Bei dem Versuch, eine bestehende Heizungsanlage, Ölheizung mit ca. 10 m² Kollektorfläche mit 300l Warmwasserspeicher und 1.100l Pufferspeicher zur Heizungsunterstützung mit zusätzlichen Kollektoren aufzurüsten, ergeben sich die folgenden Problem:
Durch eine Vergrösserung der Kollektorfläche wird eine grössere Menge an Wärmeenergie geliefert.

Bei Heizungsanlagen und Solarkollektoren nach dem Stand der Technik wird neben der Kollektorfläche auch die Fliessgeschwindigkeit der Wärmeträgerflüssigkeit fest eingestellt. Die in den Kollektoren aufgenommene Energie wird über die Fliessgeschwindigkeit der Wärmeträgerflüssigkeit in einer definierten Menge den Wärmetauscheinheiten in den Speichern zugeführt. Es kann für eine Anlage nur eine definierte Fliessgeschwindigkeiten fest eingestellt werden und es obliegt dem Heizungsinstallateur die Fliessgeschwindigkeit so zu wählen, dass einerseits immer genügend Wärmeenergie aus den Kollektoren abtransportiert wird und gleichzeitig die bei den Wärmetauscheinheiten ankommende Wärmeenergiemenge dort aufgenommen werden kann.

Bei einer zu hohen Fliessgeschwindigkeit kann in den Wärmetauscheinheiten nur wenig Energie "getauscht", d.h. aus der Wärmeträgerflüssigkeit auf den Inhalt des Speichers übergehen. Die Temperaturdifferenz zwischen ankommender und abgehender Wärmeträgerflüssigkeit ist zu gering. Das Problem ist, dass die Wärmeträgerflüssigkeit "zu warm" wieder bei den Kollektoren ankommt. Die Folge wäre, dass sich die Kollektoren immer weiter aufheizen und dann bei Erreichen der Abschalttemperatur das System sich selbst lahm legen würde.

Bei einer zu geringen Fliessgeschwindigkeit der Wärmeträgerflüssigkeit wird zwar in den Wärmetauscheinheiten in den Speichermedien genügend Wärmeenergie entnommen, bzw. getauscht, aber es würde aus den Kollektoren zu wenig Energie abgeführt. Die Folgen wären identisch, die Temperatur in den Kollektoren würde steigen, da zu wenig Energie abgeführt wird und das System würde sich selbst ausschalten.

### BESCHREIBUNG DER ERFINDUNG

Aufgabe der Erfindung ist es, die o. g. Nachteile zu beheben oder zumindest zu minimieren.

Zur Lösung der Aufgabe führt ein Sonnenkollektor nach den Merkmalen des kennzeichnenden Teils des Anspruchs 1, sowie ein Heizungssystem nach dem Anspruch 12.

Bevorzugt umfasst ein Sonnenkollektor eine Abschattungseinrichtung. Dadurch ergibt sich der Vorteil, dass Sonnenkollektoren mit grossen Flächen genutzt werden können und auch bei kühleren Temperaturen bzw. geringere Sonneneinstrahlung eine ausreichende Energiemenge liefern. An heissen Tagen können die Kollektoren abgeschattet werden, um zu verhindern, dass zu grosse Wärmemengen erzeugt werden.

In typischen Ausführungsbeispielen ist die Abschattungseinrichtung ein Rollladen. Bevorzugt ist der Rollladen steif ausgebildet. Dadurch ergibt sich der Vorteil, dass der Rollladen auch eine Schutzeinrichtung darstellt. Schäden an den Kollektoren durch eine Überhitzung werden von den sich schliessenden Rollladen verhindert. Des weiteren ist vorteilhaft, dass der Rollladen als Schneeschutz dient. Bei einsetzendem Schneefall kann der oder die Kollektoren manuell mit dem Rollladen abgedeckt werden, mit der Folge, dass kein Schnee direkt auf den oder die Kollektoren fällt. Des weiteren stellt der Rollladen auch einen Schutz vor Hagel dar.

Besonders bevorzugt wird der Rollladen in seitlichen Führungselementen geführt. Dadurch ergibt sich der Vorteil, dass der Rollladen durch Wind nicht weggeweht werden kann.

Des weiteren ist vorteilhaft, dass die Kollektoren wie gewohnt installiert werden und dann auf die Kollektoren, wie auf ein Dachfenster, eine Rollladenanlage aufgebaut wird. Dadurch ergibt sich der Vorteil, dass bereits vorhandene Kollektoren auf Dächern relativ unproblematisch mit einem Rollladen als Abschattungselement nachgerüstet werden können.

Zweckmässigerweise weist der Rollladen einen Antrieb auf. Bevorzugt ist der Antrieb geeignet zum Ein- und Ausfahren des Rollladens. Besonders bevorzugt ist der Antrieb elektrisch ausgebildet. Dadurch ergibt sich der Vorteil, dass der Rollladen auf einfache Art und Weise bedient werden kann.

In typischen Ausführungsbeispielen weist der Rollladen eine reflektierende Oberfläche auf. Dadurch ergibt sich der Vorteil, dass der Abschattungseffekt des Rollladens verstärkt wird.

Vorzugsweise weist der Rollladen in einem geschlossenen Zustand einen Abstand zu einer Oberfläche des Sonnenkollektors auf. Dadurch ergibt sich der Vorteil, dass zwischen dem Sonnenkollektor und dem Rollladen eine Luftströmung zugelassen werden kann, was ein Kühlen, um Nachheizeffekte zu vermeiden, ermöglicht. Bevorzugt weist der Rollladen zu einer Oberfläche des Sonnenkollektors einen Abstand zwischen 1 cm und 0,5 m, besonders bevorzugt 30 cm auf.

Zweckmässigerweise umfasst der Sonnenkollektor zumindest einen Ventilator. Bevorzugt ist der Ventilator geeignet zum Kühlen des Abstands zwischen dem Sonnenkollektor und der aktivierten Abschattungseinrichtung.

Bevorzugt ist der Ventilator seitliche des Kollektors angeordnet, so dass er einen Abstand zwischen dem Glas und dem Rollladen kühlt.

In einem weiteren Ausführungsbeispiel ist die Abschattungseinrichtung elektrochromatisch verglast. Dadurch ergibt sich der Vorteil, dass die

Abschattungseinrichtung auf einfache Art und Weise aktiviert werden kann. Des weiteren ist vorteilhaft, dass elektrochromatisches Glas die Eigenschaft hat, dass die Lichtdurchlässigkeit durch das Anlegen einer bestimmten elektrischen Spannung gesteuert werden kann. Vorteilhafterweise kann das Glas in unterschiedlichen Transparenzstufen abgetönt werden.

Bevorzugt werden die Kollektoren mit elektrochromatischen Gas abgedeckt. Dadurch ergibt sich der Vorteil, dass herkömmliche Kollektoren auf einfache Art und Weise mit der Abschattungseinrichtung aufgerüstet werden können.

In typischen Ausführungsbeispielen ist die Glasabdeckung des Kollektors durch elektrochromatisches Glas ersetzt. Dadurch ergibt sich der Vorteil, dass keine zusätzlichen Bauteile notwendig sind.

In typischen Ausführungsbeispielen weist der Sonnenkollektor zumindest einen Temperatursensor und eine Steuereinrichtung auf, geeignet die Abschattungseinrichtung in Abhängigkeit der mit dem Temperatursensor ermittelten Werte zu aktivieren bzw. zu deaktivieren.

Gesondert wird Schutz beansprucht für einen Rollladen als Abschattungseinrichtung für einen Sonnenkollektor mit den beschriebenen Merkmalen.

Gesondert wird Schutz beansprucht für elektrochromatisches Glas als Abschattungseinrichtung für einen Sonnenkollektor nach den beschriebenen Merkmalen.

Mit einfacher "Hardware" und der entsprechenden Steuerung kann die Gewinnung von Wärmeenergie für die Endverbraucher von fossilen Brennstoffen abgekoppelt werden, der Verbrauch von Brennstoffen reduziert, der C02-Ausstoss verringert und die Energiekosten nachhaltig gesenkt werden. In typischen Ausführungsbeispielen umfasst der Sonnekollektor eine Wärmepumpe. Dadurch ergibt sich der Vorteil, dass auch bei kühleren Temperaturen, wenn mit dem Kollektor nur vorgewärmtes Wasser bis ca. 35°C bereit gestellt werden kann die in dem Wasser enthaltene Wärmemenge für das Brauchwasser genutzt werden kann. Dies ist möglich, weil durch Zwischenschaltung einer Wärmepumpe die für das Brauchwasser geforderten Temperaturen bereit gestellt werden können.

In typischen Ausführungsbeispielen umfasst der Sonnenkollektor eine Abschattungseinrichtung, die in ihrer Durchlässigkeit verstellbar ist.

In typischen Ausführungsbeispielen umfasst der Solarkollektor einen verstellbaren Rollladen. Dadurch ergibt sich der Vorteil, dass die von den Kollektoren aufgenommene Wärmemenge reguliert werden kann.

Vorzugsweise handelt es sich dabei nicht um einen "starren" Rollladen, der nur geschlossen oder geöffnet sein kann. Besonders bevorzugt, kann der Rollladen auf unterschiedliche Empfindlichkeiten eingestellt werden. Dadurch ergibt sich der Vorteil, dass die aufgenommene Wärmemmenge auf einfache Art und Weise reguliert werden kann.

Vorzugsweise ist der Rollladen ein sogenannter "Jalousie-Rollladen". Die Horizontallamellen des Rollladens können hier, wie die Lamellen einer Jalousie, verstellt werden. Ansonsten kann dieser Rollladen, wie alle anderen Rollladen, vollständig geöffnet oder vollständig geschlossen werden. Dadurch ergibt sich der Vorteil, dass über die Stellung der Rollladenlamellen der Einfall des Sonnenlichts auf die Kollektoren und somit die Temperatur in den Kollektoren gesteuert werden kann.

Zweckmässigerweise ist zwischen den Laufschienen des Rollladens und der zu beschattenden Fenster- bzw. Kollektorfläche ein grösserer Abstand vorgesehen. Dadurch ergibt sich der Vorteil, dass für die quergestellten Lamellen des Rollladens ausreichend Platz vorhanden ist.

Gesondert wird Schutz beansprucht für ein Heizungssystem.

Vorzugsweise umfasst das Heizungssystem eine Kollektorfläche, eine Wärmetauschereinheit, einen Pufferspeicher und eine Steuereinheit, wobei der Kollektorfläche, der Wärmetauschereinheit und/oder dem Pufferspeicher ein Temperatursensor zugeordnet ist, wobei die Steuereinheit geeignet ist,eine von der Kollektorfläche aufnehmbare Wärmemenge in Abhängigkeit der gemessenen Temperaturwerte zu regulieren.

In typischen Ausführungsbeispielen umfasst das Heizungssystem eine Kollektorfläche, eine Wärmetauschereinheit, einen Pufferspeicher und eine Steuereinheit, wobei der Kollektorfläche, der Wärmetauschereinheit und/oder dem Pufferspeicher ein Temperatursensor zugeordnet ist, wobei die Steuereinheit geeignet ist, eine von dem Wärmetauscher aufnehmbare Wärmemenge in Abhängigkeit der gemessenen Temperaturwerte zu regulieren.

Besonders bevorzugt ist die Steuereinheit geeignet, eine Abschattungseinheit in Abhängigkeit der ermittelten Temperaturwerte zu verstellen.

In typischen Ausführungsbeispielen ist das Heizungssystem so ausgebildet, dass die Fliessgeschwindigkeit der Wärmeträgerflüssigkeit variabel einstellbar ist. Dadurch ergibt sich der Vorteil, dass die die abgenommene Wärmemenge auf die vorhandene Wärme angepasst werden kann.

Zweckmässigerweise umfassen die Kollektoren zumindest einen Temperatursensor. Dadurch ergibt sich der Vorteil, dass eine Temperatur an eine Steuereinheit gemeldet werden kann. Vorzugsweise sind eine Mehrzahl von Temperatursensoren in den Kollektoren vorgesehen. Dadurch ergibt sich der Vorteil, dass punktuelle Temperaturspitzen nicht zu Fehlermeldungen führen.

Bevorzugt umfasst die Wärmetauschereinheit zumindest einen Temperatursensor. Dadurch ergibt sich der Vorteil, dass eine Temperatur an eine Steuereinheit gemeldet werden kann. Vorzugsweise sind eine Mehrzahl von Temperatursensoren in der Wärmetauschereinheit vorgesehen. Dadurch ergibt sich der Vorteil, dass punktuelle Temperaturspitzen nicht zu Fehlermeldungen führen.

Zweckmässigerweise umfasst der Pufferspeicher zumindest einen Temperatursensor. Dadurch ergibt sich der Vorteil, dass eine Temperatur an eine Steuereinheit gemeldet werden kann. Vorzugsweise sind eine Mehrzahl von Temperatursensoren in dem Pufferspeichern zur Heizungsunterstützung vorgesehen. Dadurch ergibt sich der Vorteil, dass punktuelle Temperaturspitzen nicht zu Fehlermeldungen führen.

Vorzugsweise ist die Steuereinheit geeignet, die Menge des einfallenden Sonnenlichts und der aufgenommenen Energie zu regulieren. Besonders bevorzugt ist die Steuereinheit geeignet, die Menge des einfallenden Sonnenlichts und der aufgenommenen Energie in Abhängigkeit der gemessenen Temperaturwerte zu regulieren.

Noch bevorzugter ist die Steuereinheit geeignet die Öffnung der Rollladenlamellen zu regulieren.

Das erfindungsgemässe Heizungssystem hat den Vorteil, dass über die variable Fliessgeschwindigkeit das System hinsichtlich der aufgenommenen Energie und der in den Wärmetauscheinheiten abzugebenden Energie zusätzlich stabilisiert wird.

In typischen Ausführungsbeispielen umfasst die Abschattungseinrichtung elektrochromatisches Glas. Dadurch ergibt sich der Vorteil, dass die Menge der aufgenommenen Energie bereits über die "Trübung" und/oder Transparenz des Glases reguliert werden kann.

### FIGURENBESCHREIBUNG

Nachfolgend wird die Erfindung anhand der beiliegenden Zeichnung kurz beschrieben. Dieses zeigt in
**Figur 1** eine schematische Draufsicht eines Sonnenkollektors mit einem Rollladen als Abschattungseinrichtung;
**Figur 2** eine schematische Darstellung einer Seitenansicht des Sonnenkollektors mit dem Rollladen als Abschattungseinrichtung nach Figur 1.

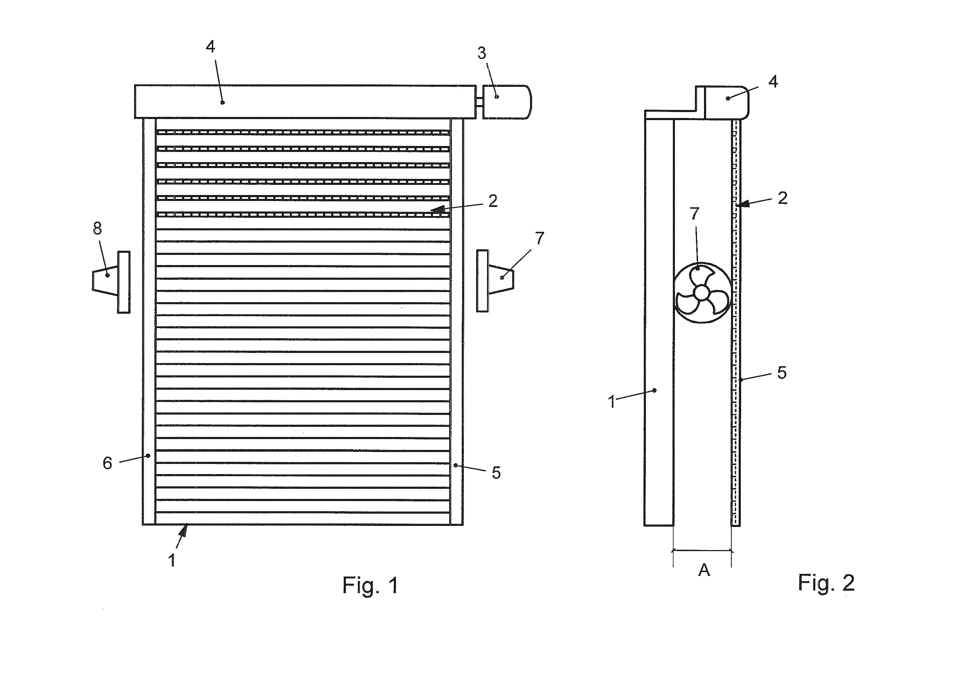

Die Figuren 1 und 2 zeigen jeweils einen Sonnenkollektor 1 mit einem Rollladen 2 als Abschattungseinrichtung.

Der Rollladen 2 umfasst einen Antrieb 3, wie in Figur 1 dargestellt. Über den Antrieb 3 kann der Rollladen 2 in einen Rollladenkasten 4 eingezogen bzw. aus dem Rollladenkasten 4 ausgebracht werden.

Der Rollladen 2 ist bevorzugt so ausgebildet, dass er eine Fläche des Sonnenkollektors 1 komplett bedecken kann. Besonders bevorzugt sind an dem Sonnenkollektor 1 seitlich Führungen 5 und 6 vorgesehen, in denen der Rollladen 2 geführt wird.

Wie in Figur 2 dargestellt, ist der Rollladen 2 in einem Abstand A von einer Oberfläche des Sonnenkollektors 1 angeordnet. Vorzugsweise beträgt der Abstand ca. 1 cm bis 1 m, bevorzugt 30 cm.

Des weiteren ist seitlich des Sonnenkollektors 1 jeweils ein Ventilator 7 und 8 angeordnet. In Figur 2 ist der Ventilator 7 erkennbar. Die Ventilatoren 7 und 8 sind so angeordnet, dass sie den Abstand A zwischen dem Sonnenkollektor 1 und dem Rollladen 2 belüften. Zur Vermeidung von Nachheizeffekten kann der Sonnenkollektor 1 bevorzugt nach dem Abschatten mit den Ventilatoren 7 und 8 gekühlt werden.

In typischen nicht dargestellten Ausführungsbeispielen ist ein Ventilator an einer Oberseite oder eine Unterseite des Sonnenkollektors angeordnet, so dass der Sonnenkollektor gekühlt wird. Bevorzugt sind ein Mehrzahl von Ventilatoren nebeneinander angeordnet, dass der Kollektor über seine gesamte Fläche gleichmässig gekühlt werden kann.

In weiteren, typischen, nicht dargestellten Ausführungsbeispielen sind eine Mehrzahl von Ventilatoren nebeneinander auf einer Seite des Kollektors angeordnet. Dadurch ergibt sich der Vorteil, dass der Kollektor über seine gesamte Fläche gleichmässig gekühlt werden kann.

Die Funktionsweise der vorliegenden Erfindung ist folgende:
Über nicht dargestellte Temperatursensoren wird die Temperatur, die auf den Solarkollektor 1 wirkt, ermittelt. Wenn die ermittelte Temperatur einen Maximalwert überschreitet, wird von einer nicht dargestellten Steuereinrichtung der Sonnenkollektor 1 mit dem Rollladen 2 abgeschattet. Dazu wird der Rollladen 2 über den Antrieb 3 aus dem Rollladenkasten 4 ausgefahren. Um Nachheizeffekte zur vermeiden, wird der Sonnenkollektor 1, wenn nötig, zusätzlich mit den Ventilatoren 7 und 8 gekühlt.

In alternativen, nicht dargestellten Ausführungsbeispielen werden statt Ventilatoren andere Lüftungs- oder Kühlungseinrichtungen eingesetzt.

Wenn die nicht dargestellten Temperatursensoren einen Temperaturwert ermitteln, der unter einer bestimmten Grenze liegt, wird in Abhängigkeit dieses ermittelten Temperaturwerts die Abschattung wieder entfernt. Dazu wird über den Antrieb 3 der Rollladen 2 wieder in den Rollladenkasten 4 eingezogen.

### Bezugszeichenliste

| | | | | | |
|---|---|---|---|---|---|
| 1 | Sonnenkollektor | 34 | | 67 | |
| 2 | Rollladen | 35 | | 68 | |
| 3 | Antrieb | 36 | | 69 | |
| 4 | Rollladenkasten | 37 | | 70 | |
| 5 | Führung | 38 | | 71 | |
| 6 | Führung | 39 | | 72 | |
| 7 | Ventilator | 40 | | 73 | |
| 8 | Ventilator | 41 | | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | A | Abstand |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Sonnenkollektor (1) **dadurch gekennzeichnet, dass** der Sonnenkollektor (1) eine Abschattungseinrichtung (2) aufweist.

2. Sonnenkollektor nach Anspruch 1, **dadurch gekennzeichnet, dass** die Abschattungseinrichtung elektrochromatisches Glas ist.

3. Sonnenkollektor nach Anspruch 1, **dadurch gekennzeichnet, dass** die Abschattungseinrichtung ein Rollladen (2) ist.

4. Sonnenkollektor nach Anspruch 3, **dadurch gekennzeichnet, dass** der Rollladen (2) einen Antrieb (3) aufweist.

5. Sonnenkollektor nach einem der Ansprüche 3 bis 4, **dadurch gekennzeichnet, dass** der Rollladen (2) eine reflektierende Oberfläche aufweist.

6. Sonnenkollektor nach einem der Ansprüche 3 bis 5, **dadurch gekennzeichnet, dass** der Rollladen (2) in geschlossenem Zustand einen Abstand (A) zu einer Oberfläche des Sonnenkollektors (1) aufweist, geeignet eine Luftströmung zwischen dem Rollladen (2) und dem Sonnekollektor (1) zuzulassen.

7. Sonnenkollektor nach einem der Ansprüche 1 bis 6, **dadurch gekennzeichnet, dass** der Sonnenkollektor (1) zumindest einen Ventilator (7, 8) umfasst, geeignet den Sonnenkollektor (1) nach dem Aktivieren der Abschattungseinrichtung (2) zu kühlen.

8. Sonnenkollektor nach einem der Ansprüche 1 bis 7, **dadurch gekennzeichnet, dass** der Sonnenkollektor (1) zumindest einen Temperatursensor und eine Steuereinrichtung aufweist, geeignet die Abschattungseinrichtung in Abhängigkeit der mit dem Temperatursensor ermittelten Werte zu aktivieren.

9. Sonnenkollektor nach einem der vorhergehenden Ansprüche, **dadurch gekennzeichnet, dass** die Abschattungseinrichtung in ihrer Durchlässigkeit verstellbar ist.

10. Rollladen (2) als Abschattungseinrichtung für einen Sonnenkollektor (1) nach einem der Ansprüche 1 bis 9.

11. Elektrochromatisches Glas als Abschattungseinrichtung für einen Sonnenkollektor nach einem der Ansprüche 1 bis 9.

12. Heizungssystem umfassend
- eine Kollektorfläche,
- eine Wärmetauschereinheit,
- einen Pufferspeicher und
- eine Steuereinheit,
**dadurch gekennzeichnet,**
**dass** der Kollektorfläche, der Wärmetauschereinheit und/oder dem Pufferspeicher ein Temperatursensor zugeordnet ist, wobei die Steuereinheit geeignet ist, eine von der Kollektorfläche aufnehmbare Wärmemenge in Abhängigkeit der gemessenen Temperaturwerte zu regulieren.

13. Heizungssystem umfassend
- eine Kollektorfläche,
- eine Wärmetauschereinheit,
- einen Pufferspeicher und
- eine Steuereinheit,
**dadurch gekennzeichnet,**
**dass** der Kollektorfläche, der Wärmetauschereinheit und/oder dem Pufferspeicher ein Temperatursensor zugeordnet ist, wobei die Steuereinheit geeignet ist, eine von dem Wärmetauscher aufnehmbare Wärmemenge in Abhängigkeit der gemessenen Temperaturwerte zu regulieren.

14. Heizungssystem nach Anspruchs 12 oder 13, **dadurch gekennzeichnet, dass** die Steuereinheit geeignet ist, eine Abschattungseinheit in Abhängigkeit der ermittelten Temperaturwerte zu verstellen.
